# FASCICULE DE BREVET EUROPEEN

(11) **EP 1 805 062 B1**
(45) Date de publication et mention de la délivrance du brevet: **23.12.2015**
(21) Numéro de dépôt: 05812309.2
(22) Date de dépôt: 20.10.2005
(51) Int. Cl.: B60R 19/34

(54) **DISPOSITIF ABSORBEUR D ENERGIE POUR POUTRE PARE-CHOCS DE VEHICULE AUTOMOBILE**
ENERGIEABSORBIERENDE VORRICHTUNG FÜR KRAFTFAHRZEUGSTOSSFÄNGER
ENERGY ABSORBER DEVICE FOR THE BUMPER BEAM OF A MOTOR VEHICLE

(30) Priorité: 20.10.2004 FR 0411146
(43) Date de publication de la demande: 11.07.2007
(73) Titulaire: VALEO SYSTEMES THERMIQUES, 78321 Le Mesnil St Denis Cedex (FR)
(72) Inventeur: GUYOMARD, Jean-Nicolas, F-27930 Le Mesnil Fuguet (FR); HARAND, Pascal, F-78190 Trappes (FR); LANARD, Jean-Louis, F-78310 Feucherolles (FR); GUINEHUT, Sébastien, F-92130 Issy les Moulineaux (FR)
(74) Mandataire: Pellegrini, Marie Claude
(86) Numéro de dépôt international: PCT/FR2005/002603
(87) Numéro de publication internationale: WO 2006/042974

(56) Documents cités:
- EP-A- 1 104 857
- DE-A1- 4 209 826
- DE-A1- 10 002 724
- FR-A- 2 785 956
- FR-A- 2 849 416
- US-A- 3 887 223

## Description

L'invention se rapporte à un dispositif absorbeur d'énergie propre à assurer une protection en cas de choc frontal d'un véhicule automobile.

Elle concerne plus particulièrement un dispositif absorbeur d'énergie pour poutre pare-chocs de véhicule automobile, du type comprenant un boîtier absorbeur d'énergie placé entre la poutre pare-chocs et l'extrémité d'un longeron de véhicule en regard de la poutre pare-chocs.

Dans les dispositifs connus de ce genre, le boîtier absorbeur d'énergie présente généralement une forme oblongue. Une première extrémité du boîtier est rattachée à la poutre pare-chocs et une deuxième extrémité est munie d'une platine support pour permettre la fixation du boîtier en bout du longeron de véhicule.

Le boîtier absorbeur d'énergie est, par exemple, composé d'une enveloppe métallique en forme de parallélépipède rectangle renfermant une mousse possédant des propriétés d'absorption d'énergie, telle qu'une mousse d'aluminium. L'enveloppe est alors fermée par une plaque métallique, qui constitue la platine support, contre laquelle la mousse est comprimée lors d'un choc frontal du véhicule.

Habituellement, le véhicule comprend deux boîtiers absorbeurs d'énergie fixés respectivement sur deux longerons et servant à la fixation de la poutre pare-chocs, cette dernière servant à son tour au montage du pare-chocs proprement-dit, encore appelé bouclier.

De tels boîtiers absorbeurs d'énergie doivent répondre à des normes strictes afin d'être capables d'absorber l'énergie d'un choc normalisé connu sous le nom de choc Danner correspondant à l'impact du véhicule contre un obstacle fixe à une vitesse de 16 km/h. L'absorption de l'énergie doit être obtenue sans que le pic d'effort enregistré dans le boîtier dépasse une limite maximale, par exemple 120 kN.

Le test Danner permet d'évaluer les ratios d'énergie absorbée rapportée à la masse de l'absorbeur d'énergie (ratio d'énergie par masse) et l'énergie absorbée rapportée à l'intrusion de l'objet qui percute le véhicule ou contre lequel le véhicule percute (ratio d'énergie par intrusion). La maximalisation de ces ratios permet de réduire les dégâts occasionnés dans une face avant de véhicule lors d'un choc frontal et par suite le coût des réparations et de la prime d'assurance qui est calculée à partir du coût de ces réparations.

Il est donc important, afin de limiter le montant de la prime d'assurance pour un véhicule donné, que ce dernier soit capable de subir un tel choc frontal sans subir de dommages importants.

Cependant, il résulte du mode de fixation des boîtiers absorbeurs d'énergie un porte-à-faux important qui, en cas de choc frontal du véhicule, résiste mal au flambage et au déversement de la poutre pare-chocs, le déversement étant défini comme la déviation sous impact de l'axe d'absorption d'énergie par rapport à l'axe du longeron.

Il est connu du document DE 42 09 826 un dispositif absorbeur d'énergie qui représente l'état de la technique le plus proche.

Un des buts de l'invention est de réaliser un dispositif absorbeur d'énergie qui résiste correctement aux efforts de flambement engendrés lors des chocs Danner en réduisant le porte-à-faux avant du boîtier absorbeur.

Un autre but de l'invention est de limiter le déversement du boîtier absorbeur et d'augmenter sa capacité d'absorption d'énergie.

Le dispositif absorbeur d'énergie pour poutre pare-chocs de véhicule automobile conformément à l'invention est telle que défini par l'objet de la revendication 1.

Selon une première caractéristique avantageuse de l'invention, pour augmenter l'efficacité du boîtier absorbeur d'énergie, celui-ci n'est plus fixé comme dans les solutions classiques, directement contre l'extrémité du longeron qui le supporte, mais est guidé dans la direction de l'axe longitudinal du longeron à l'intérieur d'une enveloppe de guidage cylindrique solidaire du longeron, ladite enveloppe de guidage étant fermée à une extrémité pour permettre, lors d'un choc frontal, l'écrasement du boîtier absorbeur d'énergie contre cette extrémité à l'intérieur de l'enveloppe de guidage.

Ceci permet notamment, à caractéristiques de boîtiers absorbeurs d'énergie égales, de réduire le porte-à-faux ainsi que l'encombrement de l'ensemble du dispositif absorbeur d'énergie.

Conformément à l'invention, l'enveloppe de guidage, est conformée sous la forme d'un boîtier comportant un fond, sur lequel vient reposer le boîtier absorbeur d'énergie, et des parois latérales dont les bords opposés au fond sont extérieurement repliés et fixés sur les bords d'extrémité du longeron.

Les parois latérales de l'enveloppe de guidage sont engagées à l'intérieur de l'extrémité du longeron et sont retenues à cette extrémité par le bord replié du boîtier en contact avec les bords d'extrémité du longeron.

Selon l'invention, la profondeur de l'enveloppe de guidage correspond à la longueur du volume résiduel du boîtier absorbeur d'énergie en fin de compression, ce qui permet d'avoir un gain de porte-à-faux qui correspond à la longueur du volume résiduel.

Afin d'éviter que l'enveloppe de guidage ne se déchire sous impact, la section d'extrémité du longeron peut être avantageusement agrandie ou préformée pour recevoir des zones d'appui de l'enveloppe de guidage.

D'autres caractéristiques et avantages de l'invention apparaîtront encore à la lecture de la description qui suit d'exemples de réalisation donnés à titre illustratif en référence aux figures annexées. Sur ces figures:
La Figure 1 est une vue d'ensemble d'une poutre pare-chocs et d'un boîtier absorbeur d'énergie montés sur une face avant de véhicule automobile ;
Les Figures 2A et 2B sont deux courbes représentatives des efforts encaissés par un boîtier absorbeur d'énergie lors d'un choc ;
Les Figures 3A, 3B d'une part et 6A, 6B d'autre part sont deux schémas représentant des situations comparées avant et après choc frontal d'un même boîtier absorbeur d'énergie monté à l'extrémité d'un longeron suivant les modes de réalisation de l'art antérieur et suivant le mode de réalisation de la Figure 4 ;
La Figure 4 est une vue éclatée illustrant le montage d'un boîtier absorbeur d'énergie à l'extrémité d'un longeron de véhicule automobile selon l'invention ;
Les Figures 5A, 5B, 5C sont des vues représentent les états d'allongement d'un boîtier absorbeur d'énergie placé à l'extrémité d'un longeron suivant le mode d'assemblage de la Figure 4 respectivement avant, pendant et après un choc frontal conformément à l' invention ;
La Figure 7 est une vue représentant un deuxième mode d'assemblage d'un boîtier absorbeur d'énergie à l'extrémité d'un longeron non couvert par l'objet de la revendication
   ;
Les Figures 8A et 8B sont deux vues d'une variante de réalisation du mode d'assemblage de la Figure 7 représentées respectivement avant et après un choc frontal ;
Les Figures 9A et 9B sont deux vues d'une variante de réalisation du mode d'assemblage des Figures 5A, 5B, 5C ;
Les Figures 10 et 11 sont deux vues représentant respectivement deux modes de réalisation différents de zones d'appui à l'intérieur d'un longeron pour l'assemblage selon l'invention d'un boîtier absorbeur d'énergie ;
La Figure 12 est une vue montrant l'assemblage d'un boîtier absorbeur d'énergie composé de blocs absorbeurs d'énergie de compositions différentes, empilés à l'extrémité d'un longeron.
La Figure 13 est une vue montrant un mode de réalisation d'un boîtier absorbeur d'énergie monobloc comportant deux niveaux d'absorption;
La Figure 14 est une vue montrant une variante de réalisation d'un dispositif absorbeur d'énergie à deux niveaux d'absorption, composé de deux boîtiers absorbeur d'énergie différents non couvert par l'objet de la revendication 1;
Les Figures 15A, 15B d'une part et 16A, 16B d'autre part, représentent des situations comparées avant et après choc frontal d'un même boîtier absorbeur d'énergie monté à l'extrémité d'un longeron suivant les modes de réalisation de l'art antérieur et suivant le mode de réalisation de la figure 14;
Les Figures 17A et 17B représentent une vue montrant une variante de réalisation du dispositif absorbeur d'énergie de la Figure 14;
La Figure 18 est une vue qui illustre une autre variante de réalisation d'un dispositif absorbeur d'énergie à deux niveaux d'absorption, composé de deux boîtiers absorbeurs d'énergie différents non couvert par l'objet de la revendication 1;
Les Figures 19A, 19B et 20A, 20B sont des vues montrant des variantes de réalisation du dispositif absorbeur d'énergie montré à la Figure 18;
La Figure 21 est une vue illustrant une variante de réalisation du boîtier absorbeur d'énergie de la Figure 13; et
La Figure 22 est une vue illustrant une variante de réalisation du dispositif absorbeur d'énergie de la Figure 14.

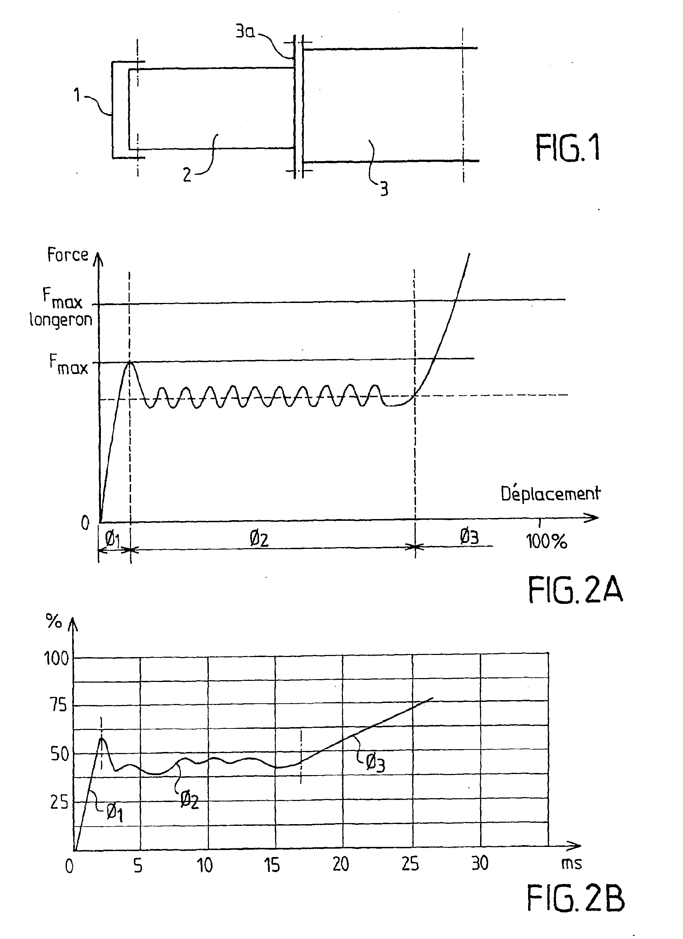

On a représenté schématiquement sur la Figure 1 une poutre pare-chocs 1 constituée par un profil creux, par exemple de section ouverte (C ou U) ou bien de section fermée, dans lequel vient se loger au moins en partie un boîtier absorbeur d'énergie 2. Classiquement le boîtier absorbeur d'énergie est réalisé dans un tronçon de profilé métallique de section rectangulaire obtenu par extrusion. Il est fermé à une extrémité par une plaque métallique 3a faisant office de platine de fixation du boîtier absorbeur d'énergie 2 à l'extrémité d'un longeron 3 de véhicule.

On a représenté sur les Figures 2A et 2B deux courbes représentatives des efforts encaissés par le boîtier absorbeur d'énergie 2 lors d'un choc frontal. La courbe 2A représente l'allure générale de la variation de l'effort absorbé par le boîtier absorbeur d'énergie 2 lors de la déformation du boîtier et la courbe 2B montre, sur exemple numérique, le pourcentage en fonction du temps des efforts encaissés par un boîtier absorbeur d'énergie 2 de caractéristiques déterminées, mesuré relativement à une valeur d'effort maximum lors d'un test Danner.

Ces courbes comportent trois phases notées respectivement □1, □2 et □3. Les deux premières phases correspondent à l'absorption d'énergie par déformation du boîtier absorbeur d'énergie 2. Durant la première phase □1, dont la durée est d'environ 2ms, le boîtier absorbeur d'énergie 2 subit une déformation élastoplastique linéaire jusqu'à une valeur de force Fmax (Figure 2A).

Sur la Figure 2B le pourcentage de l'effort encaissé par le dispositif absorbeur d'énergie varie linéairement pour atteindre une valeur d'environ 56% de l'effort maximum "Fmax longeron" encaissable par le longeron. Durant la deuxième phase □2 le boîtier absorbeur d'énergie subit une déformation de type plastique durant laquelle l'effort encaissé est à peu près constant, en oscillant autour d'une valeur moyenne. Sur la Figure 2B la phase □2 a une durée d'environ 15ms et le pourcentage de l'effort encaissé est à peu près constant, oscillant autour d'une valeur moyenne d'environ 43%.

La troisième phase □3 est une phase de densification où le boîtier absorbeur d'énergie 2 absorbe peu, voire pas, d'énergie en dessous du seuil limite d'effort "Fmax longeron". Ceci vient du fait que le volume restant est quasiment incompressible sous un effort relativement faible. Ce volume est appelé ci-après le volume résiduel. Le volume résiduel est un critère qui permet d'évaluer l'efficacité du boîtier absorbeur d'énergie. L'idéal serait de réaliser un boîtier absorbeur d'énergie qui soit capable d'absorber l'énergie sur 100% de sa longueur initiale.

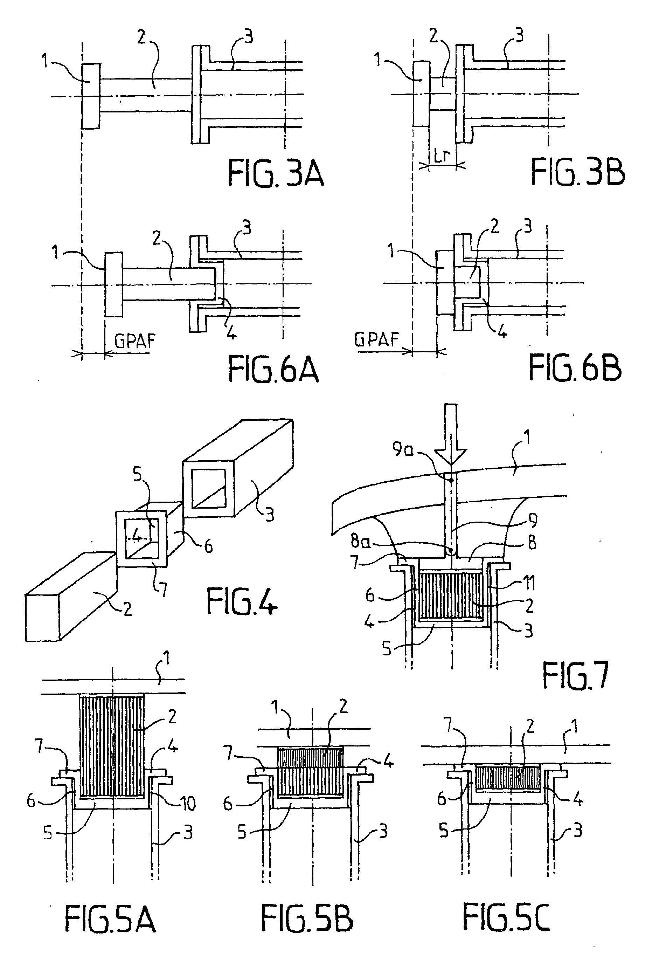

On a représenté sur les Figures 3A et 3B le comportement d'un boîtier absorbeur d'énergie 2 dans le mode classique d'assemblage de la Figure 1 où les éléments homologues à ceux de la Figure 1 portent les mêmes références. Cet exemple fait apparaître que, sous l'action d'un choc frontal du véhicule, le boîtier absorbeur d'énergie 2 se déforme et que sa longueur diminue jusqu'à une longueur déterminée Lr correspondant à un volume résiduel du boîtier 2, Figure 3B, au delà de laquelle elle ne diminue pratiquement plus.

L'existence d'un volume résiduel après un choc frontal est mis à profit par l'invention pour diminuer le porte-à-faux et l'encombrement du dispositif absorbeur d'énergie.

Selon l'invention, pour augmenter l'efficacité du boîtier absorbeur d'énergie, celui-ci est guidé dans la direction de l'axe longitudinal du longeron à l'intérieur d'une enveloppe de guidage cylindrique solidaire du longeron de section carré, rectangulaire ou circulaire adaptée à la forme du longeron, ladite enveloppe de guidage étant fermée à une extrémité pour permettre, lors d'un choc frontal, l'écrasement du boîtier absorbeur d'énergie contre cette extrémité à l'intérieur de l'enveloppe de guidage.

Dans le mode de réalisation de la Figure 4, le guidage du boîtier absorbeur 2 à l'extrémité du longeron 3 est réalisé par l'intermédiaire d'une enveloppe de guidage cylindrique 4 en forme de boîtier comportant un fond 5 sur lequel vient reposer le boîtier absorbeur d'énergie 2 et des parois latérales 6 dont les bords 7, opposés au fond 5, sont extérieurement repliés. Les parois latérales 6 du boîtier formant l'enveloppe de guidage 4 sont engagées à l'intérieur de l'extrémité du longeron 3 et sont retenues à cette extrémité par le bord 7 replié du boîtier en contact avec les bords d'extrémité du longeron 3. Afin de ne pas dégrader le longeron 2 lors d'un choc Danner, il est prévu de laisser un jeu ou espace libre référencé 10 dans les modes de réalisation qui suivent, entre l'enveloppe de guidage 4 et le longeron 3 ou entre le boîtier absorbeur d'énergie 2 et le boîtier formant l'enveloppe de guidage 4.

Dans un premier mode de réalisation représenté aux Figures 5A, 5B et 5C et 6A, 6B la profondeur du boîtier formant l'enveloppe de guidage correspond à la longueur résiduelle du boîtier absorbeur d'énergie 2 après le choc. On voit notamment sur la Figure 5B que la longueur du boîtier absorbeur d'énergie 2 diminue jusqu'à, Figure 5C, une longueur correspondant au volume résiduel pour laquelle l'extrémité du boîtier en contact avec la poutre pare-chocs 1 se retrouve au niveau du bord 7 du boîtier formant la pièce support 4. Avec ce mode de réalisation on obtient un gain de porte-à-faux "GPAF" qui correspond à la longueur Lr du volume résiduel, comme on peut le constater sur les Figures 3A ,3B et 6A, 6B juxtaposées.

Un tableau récapitulant des gains en terme de porte-à-faux, obtenus sur différents types de profilés, est représenté en annexe. Le gain en porte-à-faux obtenu grâce à l'encastrement du boîtier absorbeur d'énergie 2 dans le longeron (environ 40 mm) ajouté au gain d'intrusion obtenu grâce aux caractéristiques de la mousse d'aluminium (environ 20 mm) permet de libérer le volume nécessaire à la protection du piéton devant la poutre Danner.

Selon un mode de réalisation non couvert par l'objet de la revendication 1 représenté à la Figure 7, le boîtier absorbeur d'énergie 2 est totalement inséré à l'extrémité du longeron 3. Dans ce mode de réalisation, où les éléments homologues à ceux des figures précédentes portent les mêmes références, le boîtier absorbeur d'énergie 2 est entièrement noyé dans le boîtier formant la pièce support 4 et est comprimé lors d'un choc entre le fond 5 du boîtier formant la pièce support 4 et un piston 8. Lors d'un choc frontal le piston 8 se déplace en translation à l'intérieur du boîtier formant la pièce support 4 le long de son axe longitudinal sous l'action d'une tige 9 articulée à la poutre pare-chocs 1 par son extrémité 9a opposée à celle en contact avec le piston 8 et articulée à l'extrémité opposée avec la base du piston 8a. L'avantage de ce dispositif est qu'il permet, en plus de réduire le "Volume Résiduel", d'offrir une résistance mécanique plus élevée et de limiter le déversement. Grâce aux articulations 9a et 8a le piston peut s'orienter de manière à renvoyer l'effort suivant l'axe longitudinal du véhicule, ce qui permet une meilleure absorption de l'énergie par le boîtier absorbeur d'énergie 2.

Afin d'augmenter la capacité d'absorption de l'ensemble, les modes de réalisation précédents peuvent être avantageusement améliorés en provoquant lors du choc une déformation du boîtier formant la pièce support 4.

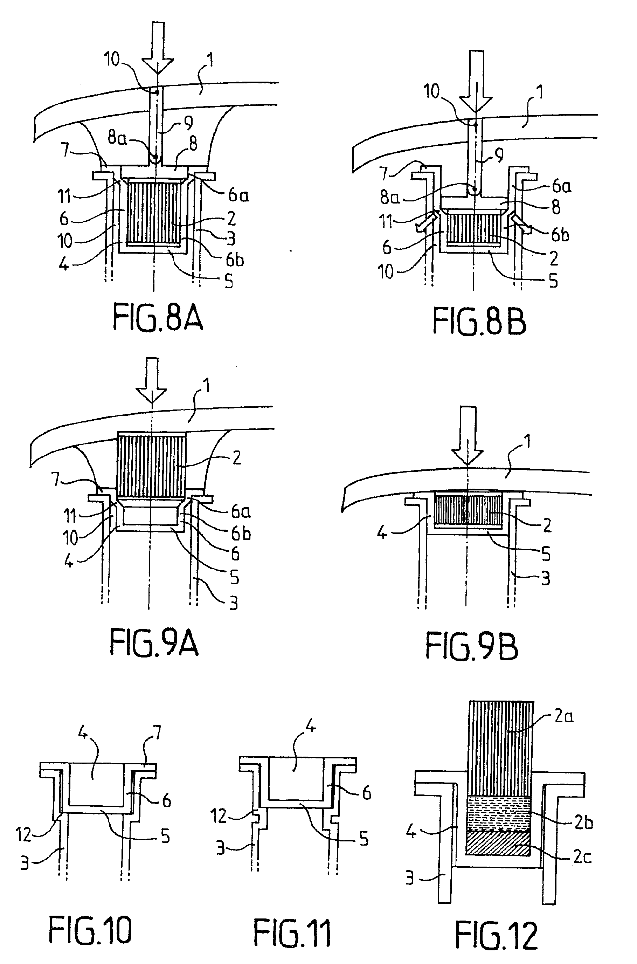

Selon un mode réalisation avantageux, il est possible d'augmenter la capacité d'absorption du dispositif représenté à la Figure 7, par une déformation de l'enveloppe de guidage 4 en donnant à la section transversale du piston 8 une dimension plus grande que celle de la section transversale intérieure du boîtier formant l'enveloppe de guidage 4 et en déterminant les dimensions de l'enveloppe de guidage 4 de manière à laisser un espace libre 10 entre l'extérieur des parois latérales 6 du boîtier formant l'enveloppe de guidage 4 et la paroi interne du longeron 3 comme cela est représenté aux Figures 8A et 8B où les éléments homologues à ceux de la Figure 7 portent les mêmes références. De cette manière, la paroi latérale 6 du boîtier formant l'enveloppe de guidage 4 est repoussée contre la paroi interne du longeron 3 lorsque le piston 8 progresse à l'intérieur du boîtier formant l'enveloppe de guidage 4.

Pour ce faire, l'espace intérieur du boîtier formant l'enveloppe de guidage 4 est partagé en deux parties, une partie supérieure et une partie inférieure, de sections transversales différentes, séparées par un épaulement 11, la section transversale de la partie supérieure étant plus grande que celle de la partie inférieure. En l'absence de choc frontal le volume de la partie inférieure est entièrement occupé par le boîtier absorbeur d'énergie 2. Le piston 8 est engagé dans la partie supérieure du boîtier formant l'enveloppe de guidage 4 et repose en butée contre l'épaulement 11. Les dimensions de l'enveloppe de guidage 4 sont déterminées de manière à laisser un espace libre 10 entre l'extérieur des parois latérales 6b de la partie inférieure du boîtier formant l'enveloppe de guidage 4 et la paroi interne du longeron 3, la paroi externe 6a de la partie supérieure du boîtier formant l'enveloppe de guidage 4 étant en contact avec la paroi interne du longeron 3. En présence d'un choc frontal le piston 8 repousse la paroi latérale 6b de la partie inférieure contre la paroi intérieure du longeron 3 en même temps qu'il comprime le boîtier absorbeur d'énergie 2 contre le fond 5 du boîtier formant l'enveloppe de guidage 4. Le mouvement s'arrête lorsque la matière constituant le boîtier absorbeur d'énergie 2 occupe un volume correspondant au volume résiduel.

De façon similaire la capacité d'absorption du dispositif représenté aux Figures 5A, 5B et 5C; 6A et 6B peut être augmentée en donnant à la section transversale du boîtier absorbeur d'énergie 2 une dimension plus grande que celle de la section transversale intérieure du boîtier formant l'enveloppe de guidage 4 et en déterminant les dimensions de la section transversale de l'enveloppe de guidage 4 de manière à laisser un espace libre 10 entre l'extérieur des parois latérales 6 du boîtier formant l'enveloppe de guidage 4 et la paroi interne du longeron 3 suivant le mode de réalisation des Figures 9A et 9B. Toutefois, à la différence du mode de réalisation des Figures 5A, 5B, 5C; 6A, 6B, le boîtier absorbeur d'énergie n'est engagé que partiellement dans le boîtier formant l'enveloppe de guidage 4. De cette manière, la paroi latérale 6 du boîtier formant l'enveloppe de guidage 4 est repoussée contre la paroi interne du longeron 3 lorsque le boîtier absorbeur d'énergie 2 progresse sous l'action d'un choc frontal à l'intérieur du boîtier formant l'enveloppe de guidage 4.

De façon similaire au mode de réalisation des Figures 8A et 8B, où les éléments homologues portent les mêmes références, l'espace intérieur du boîtier formant l'enveloppe de guidage 4 est partagé en deux parties dans le mode de réalisation des Figures 9A et 9B, une partie supérieure et une partie inférieure, de sections transversales différentes, séparées par un épaulement 11, la section transversale de la partie supérieure étant plus grande que celle de la partie inférieure. La partie inférieure du boîtier absorbeur d'énergie 2, opposée à celle en contact avec la poutre pare-chocs 1, est engagée dans la partie supérieure du boîtier formant la pièce support 4 et repose en butée contre l'épaulement 11. Les dimensions de l'enveloppe de guidage sont déterminées de manière à laisser un espace libre 10 entre l'extérieur des parois latérales 6b de la partie inférieure du boîtier formant l'enveloppe de guidage 4 et la paroi interne du longeron 3, la paroi externe 6a de la partie supérieure du boîtier formant l'enveloppe de guidage 4 restant en contact avec la paroi interne du longeron 3. En présence d'un choc frontal le boîtier absorbeur d'énergie 2 pénètre à l'intérieur de la partie inférieure du boîtier formant l'enveloppe de guidage 4 en repoussant la paroi latérale 6b de la partie inférieure contre la paroi intérieure du longeron 3. Le mouvement s'arrête lorsque le boîtier formant l'enveloppe de guidage 4 est rempli en sa totalité par la matière constituant le boîtier absorbeur d'énergie 2. Comme dans l'exemple précédent, la profondeur du boîtier formant l'enveloppe de guidage 4 pourra être déterminée de façon que son volume corresponde à celui du volume résiduel du boîtier absorbeur d'énergie 2.

Selon encore d'autres variantes de réalisation des modes précédents et pour éviter notamment que le boîtier formant l'enveloppe de guidage 4 ne se déchire sous l'impact d'un choc frontal, il est encore possible de réaliser des zones d'appui à l'intérieur des longerons revêtant différentes formes à sections de longeron variables en formant, par exemple, un épaulement 12 dans le longeron 3 sur lequel reposera le fond 5 de la pièce support 4, comme représenté aux Figures 10 et 11 ou préformées localement par des déformations programmées ou obtenues par emboutissage.

Enfin, comme la valeur du volume résiduel est masquée dans le volume du longeron, il est aussi possible d'empiler différents boîtiers absorbeur d'énergie 2a, 2b, 2c, à l'intérieur du boîtier formant l'enveloppe de guidage 4, comme cela est représenté Figure 12, et possédant des raideurs plus ou moins importantes en fonction de la masse du véhicule, ceci afin de permettre de répondre à une gamme complète de véhicules et de proposer des solutions standard pour des véhicules de masse identique.

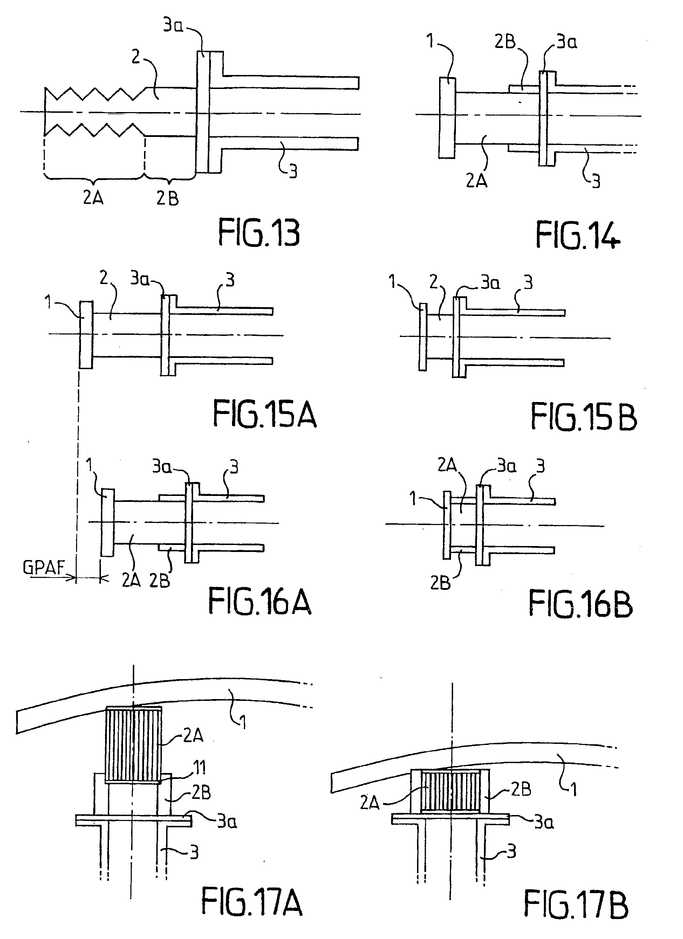

Dans le mode de réalisation de la Figure 13, le boîtier absorbeur d'énergie réalise en un seul bloc deux niveaux d'absorption, le premier niveau est taré pour subir un choc Danner à faible vitesse de l'ordre de 16km/h alors que le deuxième niveau est taré pour subir un choc à grande vitesse supérieure à 16 Km/h. Le bloc est partagé en deux parties, une partie 2B tarée pour les grandes vitesses fixée sur une platine 3a à l'extrémité du longeron 3 et une partie 2A tarée pour les chocs Danner à faible vitesse. Afin de gagner en efficacité le boîtier absorbeur d'énergie 2B est conçu de manière à ce que le volume résiduel du boîtier correspondant à la partie du boîtier 2A tarée pour les faibles vitesses se retrouve à l'intérieur de la deuxième partie 2B tarée pour les grandes vitesses en fin de choc à 16 Km/h.

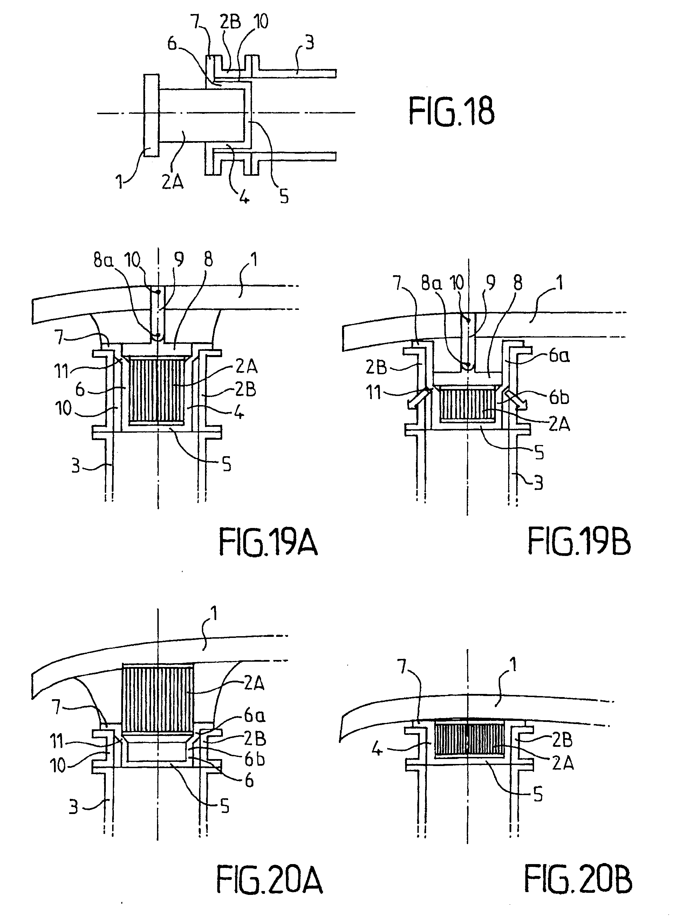

Il est aussi possible de réaliser un dispositif absorbeur d'énergie à deux niveaux d'absorption d'énergie en mettant en oeuvre deux blocs ou boîtiers absorbeurs d'énergie 2A et 2B, comme le montrent les Figures 14 et 18. Dans le mode de réalisation de la Figure 14, le deuxième boîtier absorbeur d'énergie 2B sert également d'enveloppe de guidage pour le premier boîtier absorbeur d'énergie 2A. Pour ce faire le deuxième boîtier absorbeur d'énergie 2B présente la forme d'un cylindre creux et est réalisé dans un matériau absorbeur d'énergie disposant d'une raideur supérieure à celle du premier boîtier absorbeur d'énergie 2A. Le premier boîtier absorbeur d'énergie 2A est disposé entre la poutre pare-chocs 1 et l'extrémité du longeron 3 et est taré pour encaisser les chocs à faibles vitesses inférieures à 16 Km/h. Le deuxième boîtier absorbeur d'énergie 2B entoure le premier boîtier absorbeur d'énergie 2A à l'extrémité du longeron 3 et sa longueur correspond à la dimension du volume résiduel du premier boîtier absorbeur d'énergie 2A. Ce mode de réalisation permet d'obtenir un gain au niveau du porte-à-faux avant, comme le fait apparaître la juxtaposition des Figures 15A, 15B d'une part, avec respectivement les Figures 16A et 16B, d'autre part. Comme le montrent les Figures 16A et 16B et le tableau I en annexe le gain en porte-à-faux correspond à la longueur du volume résiduel.

Comme le font apparaître les Figures 17A et 17B, il est possible d'apporter au mode de réalisation de la Figure 14 une variante d'exécution similaire à celle montrée aux Figures 9A et 9C en partageant l'espace intérieur du deuxième boîtier absorbeur d'énergie 2B en deux parties, une partie supérieure et une partie inférieure, de sections transversales différentes, séparées par un épaulement 11, la section transversale de la partie supérieure étant plus grande que celle de la partie inférieure. La partie inférieure du premier boîtier absorbeur d'énergie 2A, opposée à celle en contact avec la poutre pare-chocs 1, est engagée dans la partie supérieure du deuxième boîtier absorbeur d'énergie 2B et repose contre l'épaulement 11. En présence d'un choc frontal le premier boîtier absorbeur d'énergie 2A pénètre à l'intérieur de la partie inférieure du deuxième boîtier absorbeur 2B d'énergie en repoussant la paroi intérieure du deuxième boîtier absorbeur d'énergie 2B. Le mouvement s'arrête lorsque la partie intérieure du deuxième boîtier absorbeur d'énergie 2B est remplie entièrement par la matière constituant le premier boîtier absorbeur d'énergie 2A.

Dans le mode de réalisation de la Figure 18, où les éléments homologues à ceux de la Figure 4 portent les mêmes références, le guidage du boîtier absorbeur 2A à l'extrémité du longeron 3 est réalisé par l'intermédiaire d'une enveloppe de guidage cylindrique 4 en forme de boîtier comportant un fond 5 sur lequel vient reposer le boîtier absorbeur d'énergie 2 et des parois latérales 6 dont les bords 7 opposés au fond 5 sont extérieurement repliés. Les parois latérales 6 du boîtier formant l'enveloppe de guidage 4 sont engagées à l'intérieur de l'extrémité d'un deuxième boîtier absorbeur d'énergie 2B de forme cylindrique fixé extérieurement au longeron 3 à son extrémité. Le bord replié 7 de l'enveloppe de guidage 4 est maintenu en contact avec les bords d'extrémité du deuxième boîtier absorbeur d'énergie 2B opposés à ceux en contact avec l'extrémité du longeron 3. Afin de ne pas dégrader le longeron 2 lors d'un choc Danner, il est prévu de laisser un espace libre référencé 10, entre l'enveloppe de guidage 4 et l'intérieur du deuxième boîtier absorbeur d'énergie 2B.

Comme le mode de réalisation de la Figure 18 ne diffère de celui de la Figure 4 que par l'introduction d'un deuxième boîtier d'absorption d'énergie 2B entre le bord replié de l'enveloppe de guidage 4 et l'extrémité du longeron 3 dont il constitue un prolongement, on conçoit que les mêmes variantes d'exécution du mode de réalisation de la Figure 4 représentées aux Figures 5A à 12 peuvent s'appliquer au mode de réalisation de la Figure 18. Des variantes de réalisation correspondant respectivement aux modes de réalisation des figures 8A, 8B d'une part, et des Figures 9A, 9B d'autre part, et où les éléments homologues portent les mêmes références, sont représentées aux Figures 19A, 19B et 20A et 20B.

Sur les Figures 19A et 19B l'enveloppe de guidage 4 est introduite à l'intérieur du deuxième boîtier d'absorption d'énergie 2B et est maintenue par le bord replié 7 contre l'extrémité ouverte du boîtier de guidage 2B opposée à celle en contact avec l'extrémité du longeron 3. Lors d'un choc frontal le boîtier absorbeur d'énergie 2A est comprimé entre le fond 5 de l'enveloppe de guidage et le piston 8 accouplé à la poutre pare-chocs 1. Lors d'un choc Danner à faible vitesse la poutre pare-chocs 1 se retrouve comme le montre la Figure 19B à proximité du bord replié 7 de l'enveloppe de guidage 4. Pour des chocs se produisant à des vitesses supérieures, la poutre pare-chocs 1 vient en contact avec le bord replié de l'enveloppe de guidage et le deuxième boîtier absorbeur d'énergie 2B est comprimé entre l'extrémité du longeron 3 et la poutre pare-chocs 1.

Sur les Figures 20A et 20B, l'enveloppe de guidage 4 est introduite à l'intérieur du deuxième boîtier d'absorption d'énergie 2B et est maintenue par le bord replié 7 contre l'extrémité ouverte du boîtier de guidage 2B opposée à celle en contact avec l'extrémité du longeron 3. Lors d'un choc Danner le premier boîtier absorbeur d'énergie 2A qui repose sur l'épaulement 11 à l'extrémité ouverte de l'enveloppe de guidage 4 est poussé à l'intérieur de l'enveloppe de guidage jusqu'à atteindre le fond 5 contre lequel il est comprimé. En fin de compression le volume résiduel du premier boîtier absorbeur d'énergie 2A occupe entièrement l'espace intérieur de l'enveloppe de guidage et la poutre pare-chocs 1 se situe à proximité de l'extrémité repliée 7 de l'enveloppe de guidage 4. Pour des chocs se produisant à des vitesses supérieures la poutre pare-chocs 1 vient en contact avec le bord replié de l'enveloppe de guidage et le deuxième boîtier absorbeur d'énergie 2B est comprimé entre l'extrémité du longeron 3 et la poutre pare-chocs 1.

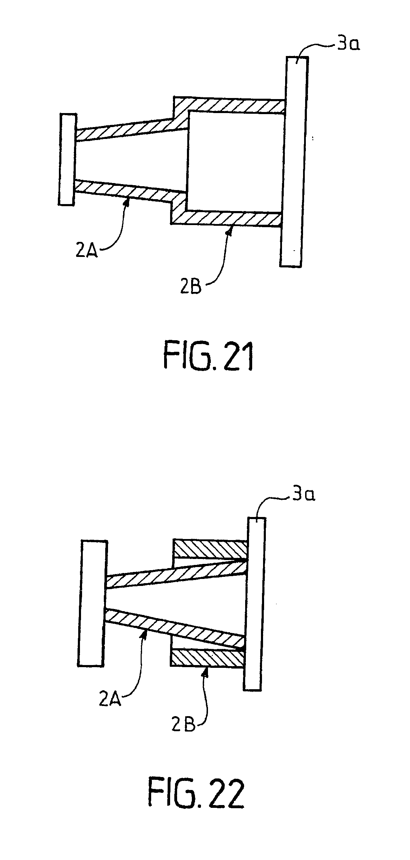

Dans le mode de réalisation de la Figure 21, qui représente une variante de la Figure 13, le boîtier absorbeur d'énergie est réalisé en un seul bloc à deux niveaux d'absorption. La partie 2A tarée pour les chocs Danner à faible vitesse est réalisée avec une paroi partiellement conique, tandis que la partie 2B tarée pour les grandes vitesses est réalisée avec une paroi cylindrique. En cas de choc, la partie 2A peut ainsi se déformer, au moins en partie, à l'intérieur de la partie 2B.

La Figure 22, qui représente une variante de la Figure 14, représente un dispositif absorbeur d'énergie à deux niveaux d'absorption d'énergie comportant deux blocs ou boîtiers absorbeurs d'énergie 2A et 2B. Le boîtier 2A est réalisé avec une paroi conique ou tronconique, tandis que le boîtier 2B est réalisé avec une paroi conique et sert également d'enveloppe de guidage pour le boîtier 2A. En cas de choc, la partie 2A peut ainsi se déformer, au moins en partie, à l'intérieur de la partie 2B

### Annexe

**Tableau I**

| **Profilé** | **Remplissage** | **Longueur totale avant choc frontal (mm)** | **Longueur du résiduel (mm) Gain P.A.F (mm)** | **Longueur du résiduel (%) Gain P.A.F (%)** |
|---|---|---|---|---|
| Epaisseur 2 mm | Mousse Alu 0,3 g/cm³ | 110 | 43 | 39% |
| | | 140 | 60 | 43% |
| | Pas de mousse | 140 | 41 | 29% |

## Revendications

1. Dispositif absorbeur d'énergie pour poutre pare-chocs (1) de véhicule automobile, du type comprenant un boîtier absorbeur d'énergie (2, 2A) disposé entre la poutre pare-chocs (1) et l'extrémité d'un longeron (3) de véhicule en regard avec la poutre pare-chocs (1), ledit dispositif absorbeur d'énergie comportant en outre une enveloppe de guidage cylindrique (4) le boîtier absorbeur d'énergie (2, 2A) étant guidé dans la direction de l'axe longitudinal du longeron (3) à l'intérieur de l'enveloppe de guidage cylindrique (4) solidaire du longeron, ladite enveloppe de guidage (4) étant fermée à une extrémité pour permettre, lors d'un choc frontal, l'écrasement du boîtier absorbeur d'énergie (2, 2A) contre cette extrémité à l'intérieur de l'enveloppe de guidage (4), où l'enveloppe de guidage (4) est en forme de boîtier et comprend un fond (5) et des parois latérales (6) dont les bords (7) opposés au fond sont extérieurement repliés, les parois latérales (6) étant engagées à l'intérieur de l'extrémité du longeron (3) et retenues à cette extrémité par les bords repliés (7) de l'enveloppe de guidage (4) en contact avec les bords d'extrémité du longeron (3), et où l'enveloppe de guidage (4) est en forme de boîtier dans lequel est engagé en tout ou en partie le boîtier absorbeur d'énergie (2, 2A)et où la profondeur du boîtier formant l'enveloppe de guidage (4) correspond à la longueur résiduelle du boîtier absorbeur d'énergie (2, 2A) en fin de compression dûe à un choc frontal du véhicule, ladite longueur résiduelle correspondant au volume résiduel pour laquelle l'extrémité du boitier absorbeur d'énergie (2) en contact avec la poutre pare-chocs se retrouve au niveau du bord (7) du boitier de l'enveloppe de guidage (4).

2. Dispositif selon la revendication précédente, **caractérisé en ce que** le fond (5) de l'enveloppe de guidage en forme de boîtier (4) repose sur un épaulement (12) intérieur du longeron (3).

## Patentansprüche

1. Energie absorbierende Vorrichtung für einen Stoßfänger (1) eines Kraftfahrzeugs, umfassend ein Energie absorbierendes Gehäuse (2, 2A), das zwischen dem Stoßfänger (1) und dem Ende eines Fahrzeuglängsträgers (3) gegenüber dem Stoßfänger (1) angeordnet ist, wobei die Energie absorbierende Vorrichtung ferner eine zylindrische Führungshülle (4) umfasst, wobei das Energie absorbierende Gehäuse (2, 2A) in die Richtung der Längsachse des Längsträgers (3) im Inneren der zylindrischen Führungshülle (4), die mit dem Längsträger verbunden ist, geführt wird, wobei die Führungshülle (4) an einem Ende geschlossen ist, um bei einem Frontalzusammenstoß das Zusammendrücken des Energie absorbierenden Gehäuses (2, 2A) gegen dieses Ende im Inneren der Führungshülle (4) zu ermöglichen, wobei die Führungshülle (4) Gehäuseform hat und einen Boden (5) und Seitenwände (6) umfasst, deren dem Boden gegenüberliegenden Ränder (7) außen umgelegt sind, wobei die Seitenwände (6) im Inneren des Endes des Längsträgers (3) in Eingriff sind und an diesem Ende durch die umgelegten Ränder (7) der Führungshülle (4) in Kontakt mit den Endrändern des Längsträgers (3) gehalten werden, und wobei die Führungshülle (4) Gehäuseform hat, in dem die Gesamtheit oder ein Teil des Energie absorbierenden Gehäuses (2, 2A) in Eingriff ist, und wobei die Tiefe des die Führungshülle (4) bildenden Gehäuses der Restlänge des Energie absorbierenden Gehäuses (2, 2A) nach dem Zusammendrücken nach einem Frontalzusammenstoß des Fahrzeugs entspricht, wobei die Restlänge dem Restvolumen entspricht, bei dem sich das Ende des Energie absorbierenden Gehäuses (2) in Kontakt mit dem Stoßfänger im Bereich des Randes (7) des Gehäuses der Führungshülle (4) wiederfindet.

2. Vorrichtung nach dem vorhergehenden Anspruch, **dadurch gekennzeichnet, dass** der Boden (5) der Führungshülle in Gehäuseform (4) auf einem inneren Absatz (12) des Längsträgers (3) liegt.

## Claims

1. Energy-absorbing device for a motor vehicle bumper beam (1), of the type comprising an energy-absorbing box (2, 2A) arranged between the bumper beam (1) and the end of a vehicle side rail (3) facing the bumper beam (1), the said energy-absorbing device additionally comprising a cylindrical guide sleeve (4), the energy-absorbing box (2, 2A) being guided in the direction of the longitudinal axis of the side rail (3) inside the cylindrical guide sleeve (4), which is secured to the side rail, the said guide sleeve (4) being closed at one end in order, during a frontal impact, to allow the energy-absorbing box (2, 2A) to be crumpled against this end inside the guide sleeve (4), wherein the guide sleeve (4) is in the form of a housing and comprises an end wall (5) and side walls (6) of which the edges (7) opposite to the end wall are externally folded, the side walls (6) being engaged inside the end of the side rail (3) and retained at this end by the folded edges (7) of the guide sleeve (4) in contact with the end edges of the side rail (3), and wherein the guide sleeve (4) is in the form of a housing in which the energy-absorbing box (2, 2A) is engaged in full or in part and wherein the depth of the housing forming the guide sleeve (4) corresponds to the residual length of the energy-absorbing box (2, 2A) at the end of compression due to a frontal impact of the vehicle, the said residual length corresponding to the residual volume for which the end of the energy-absorbing box (2) in contact with the bumper beam is situated in the region of the edge (7) of the housing of the guide sleeve (4).

2. Device according to the preceding claim, **characterized in that** the end wall (5) of the guide sleeve in the form of a housing (4) rests on an inner shoulder (12) of the side rail (3).
